# EUROPÄISCHE PATENTSCHRIFT

(11) **EP 3 619 774 B1**
(45) Veröffentlichungstag und Bekanntmachung des Hinweises auf die Patenterteilung: **05.11.2025**
(21) Anmeldenummer: 18720292.4
(22) Anmeldetag: 04.05.2018
(51) Int. Cl.: H01R 4/68, H01B 12/16, H02G 15/34

(54) **STROMSCHIENENSYSTEMELEMENT MIT EINEM SUPRALEITERSTRANG UND EINEM VERBINDUNGSSTÜCK SOWIE STROMSCHIENE MIT EINER VIELZAHL VON SOLCHEN STROMSCHIENENSYSTEMELEMENTEN**
BUS BAR SYSTEM ELEMENT HAVING A SUPERCONDUCTOR STRAND AND A CONNECTION PIECE, AND BUS BAR HAVING A PLURALITY OF BUS BAR SYSTEM ELEMENTS OF THIS TYPE
ÉLÉMENT DE SYSTÈME DE BARRES CONDUCTRICES POURVU D'UN SUPRACONDUCTEUR ET D'UNE PIÈCE DE LIAISON ET BARRE CONDUCTRICE POURVUE D'UNE PLURALITÉ D'ÉLÉMENT DE SYSTÈME DE BARRES CONDUCTRICES

(30) Priorität: 04.05.2017 LU 100190
(43) Veröffentlichungstag der Anmeldung: 11.03.2020
(73) Patentinhaber: Vision Electric Super Conductors GmbH, 67657 Kaiserslautern (DE); Karlsruher Institut für Technologie, 76131 Karlsruhe (DE)
(72) Erfinder: KUDYMOV, Andrej, 76297 Stutensee (DE); STRAUSS, Severin, 76137 Karlsruhe (DE); ZERMENO, Viktor Manuel Rodriguez, 76137 Karlsruhe (DE); ELSCHNER, Steffen, 69121 Heidelberg (DE); BRAND, Jörg, 68794 Oberhausen (DE); HUWER, Stefan, 67715 Geiselberg (DE); REISER, Wolfgang, 67657 Kaiserslautern (DE); HANEBECK, Claus, 67661 Kaiserslautern (DE); SCHREINER, Florian, 76848 Lug (DE)
(74) Vertreter: Gille Hrabal Partnerschaftsgesellschaft mbB Patentanwälte
(86) Internationale Anmeldenummer: PCT/EP2018/061486
(87) Internationale Veröffentlichungsnummer: WO 2018/202845

(56) Entgegenhaltungen:
- WO-A1-2016/077662
- JP-A- 2015 008 076
- JP-A- 2015 211 009
- JP-A- H07 263 045
- US-B1- 6 435 888
- "Soldering", WIKIPEDIA, 26 September 2009 (2009-09-26), XP055084349, Retrieved from the Internet <URL:http://en.wikipedia.org/w/index.php?title=Soldering&oldid=316382696> [retrieved on 20131017]
- B.N. SORBOM ET AL: "ARC: A compact, high-field, fusion nuclear science facility and demonstration power plant with demountable magnets", FUSION ENGINEERING AND DESIGN., vol. 100, November 2015 (2015-11-01), NL, pages 378 - 405, XP055434162, ISSN: 0920-3796, DOI: 10.1016/j.fusengdes.2015.07.008
- M TAKAYASU ET AL: "Termination Methods for REBCO Tape High-Current Cable Conductors", 19 June 2016 (2016-06-19), XP055494463, Retrieved from the Internet <URL:http://library.psfc.mit.edu/catalog/reports/2010/16ja/16ja041/16ja041_full.pdf> [retrieved on 20180723]
- MANGIAROTTI F J ET AL: "Demountable Toroidal Field Magnets for Use in a Compact Modular Fusion Reactor", JOURNAL OF PHYSICS: CONFERENCE SERIES, INSTITUTE OF PHYSICS PUBLISHING, BRISTOL, GB, vol. 507, no. 3, 12 May 2014 (2014-05-12), pages 32030, XP020263154, ISSN: 1742-6596, [retrieved on 20140512], DOI: 10.1088/1742-6596/507/3/032030

## Beschreibung

Die Erfindung betrifft ein Stromschienensystemelement, mit einem sich entlang des Stromschienensystemelements erstreckenden Supraleiterstrang und einem Verbindungstück am Ende des Supraleiterstrangs zum elektrischen Verbinden des Supraleiterstrangs mit einem weiteren Supraleiterstrang eines weiteren Stromschienensystemelements mit einem Gegenverbindungsstück. Ferner betrifft sie eine Stromschiene mit einer Vielzahl von solchen Stromschienensystemelementen.

Es besteht das Problem des einfachen und zuverlässigen Verbindens elektrischer Stromschienensystemelemente innerhalb eines aus mehreren Systemelementen bestehenden Stromschienensystems. Die Systemelemente bestehen im Wesentlichen aus einem langgesteckten, rohrförmigen, vakuumisolierten und beidseitig offenen Gehäuse oder "Kryostat", durch dessen Inneres ein Strang, gebildet aus Supraleitern, durchgeführt ist. Die Supraleiter bzw. der Stang stehen an beiden Enden des Gehäuses über. Bei der Installation des Gesamtsystems werden im Stand der Technik die überstehenden Supraleiter mittels Verbindungsbauteilen elektrisch leitend miteinander verbunden, so dass eine durchgängige Leiterstrecke entsteht. Danach wird das Gehäuse an den Verbindungsstellen geschlossen, so dass ein komplett geschlossenes Stromschienensystem entsteht. Das Stromschienensystem wird für Hochstromzwecke eingesetzt, bei denen Gleichstrom oder Wechselstrom im Bereich von Kiloampere bis zu Megaampere übertragen werden soll und dessen Leitermaterial im Wesentlichen aus Hochtemperatursupraleitern (HTSL) besteht, die im Nenntemperaturbereich unterhalb der sogenannten Sprungtemperatur den Gleichstrom verlustfrei leiten können.

Diese HTSL liegen nicht in der klassischen Drahtform vor, sondern als Bandmaterial in üblichen Breiten von 4, 10, 12mm und geplant bis zu 100mm, sowie in Dicken von 20 bis 300µm vor. Sie werden zur Erreichung der erforderlichen hohen Stromtragfähigkeit des Systemelements zu Stapeln zusammengefasst. Ein oder mehrere Stapel ergeben einen Strang. Ein oder mehrere Stränge ergeben die Stromtragfähigkeit des Gesamtsystems.

Im Folgenden werden handelsübliche Hochtemperatursupraleiterbänder (HTSL -Bänder) beschrieben, die mit allen hier genannten Merkmalen Bestandteil der der Erfindung sein können. HTSL Bänder bestehen im Wesentlichen aus einer auf einem metallischen Träger oder Substrat aufgebauten, dünnen keramischen Schicht, die bei Unterschreitung der sogenannten Sprungtemperatur supraleitend wird. Die Schichten eines HTSL setzen sich je nach Anforderung, Hersteller oder Herstellverfahren unterschiedlich zusammen. In der Regel ist die supraleitende Schicht mit einer dünnen Silberschicht von 0,5-2µm beaufschlagt. Das fertige HTSL-Band kann zusätzlich noch galvanisch oder durch Laminieren mit einer Stabilisierung aus Kupfer beschichtet sein. Weiterhin kann der Leiter galvanisch oder durch Tauchen im Bad mit Lot beschichtet sein. Zum elektrischen Kontaktieren mit anderen HTSL Bändern empfehlen sich stets die auf der supraleitenden keramischen Schicht direkt kontaktierten metallischen Schichten aus elektrisch hochleitfähigem Material, da das Substrat im Vergleich dazu als hochohmig anzusehen ist. Als Unterscheidungsmerkmal in der Beschreibung wird die niederohmige HTSL Seite des Bandes als Gutseite bezeichnet. Im Falle einer Rundumbeschichtung mit Kupfer kann bei ausreichender Schichtdicke der Strom von der Gutseite auch auf die Rückseite, also den metallischen Träger geleitet werden, was aber mit ohmschen Widerstand behaftet ist, der durch Beschichtungsmaterial und Schichtdicke bestimmt wird.

Die supraleitende Schicht wird bei der Herstellung von HTSL-Bändern üblicherweise mittels physikalischen oder chemischen Verfahren einseitig auf den Träger aus Trägermaterial bzw. das Substrat aufgebracht. Als Träger kommen Nickel-Basislegierungen (HASTELLOY C-276) oder Wolfram-Nickellegierungen in Frage. Trägerbänder aus Wolfram-Nickellegierungen werden unter anderem einer Glühbehandlung unterzogen und gegebenenfalls auch vorstrukturiert. Verfahrensbedingt sind sie daher vergleichsweise dünn, typisch <= 60µm, und weich. Dadurch sind sie sehr empfindlich und können bei der späteren Handhabung leicht beschädigt werden oder degradieren. Um Handhabung und die Stromtragfähigkeit zu verbessern, werden solche Leiter mit ihren die jeweiligen Rückseiten bildenden Trägern zusammenlaminiert. Es entsteht ein Doppelleiter mit verbesserter Steifigkeit, Stromtragfähigkeit und Handhabbarkeit. Der Doppelleiter weist im Unterschied zu Einzelleiter zwei Gutseiten auf. In einigen Fällen wird die supraleitende Schicht des handelsüblichen Einzelleiters, der dem Doppelleiter zugrunde liegt, mittels chemischer Verfahren hergestellt und zeigt in Lötversuchen eine hohe Druckempfindlichkeit. Der Leiter degradiert dann schon bei vergleichsweise geringer Druckbeaufschlagung. Daher verlangt dieser Leiter sowohl bei der Verlötung als auch bei der Stromübertragung von einem Verbinderteil auf das nächste Verbinderteil andere Voraussetzungen als der einseitig zu nutzende Einzelleiter, basierend auf Hastelloysubstrat und physikalischer Beschichtung. Darauf wird weiter unten separat eingegangen.

Werden die HTSL-Bänder in Stapeln geschichtet, so beeinflussen sie sich gegenseitig über das selbst erzeugte Magnetfeld, in der Form, dass sich die Stromtragfähigkeit jedes einzelnen HTSL-Bandes umso mehr reduziert je höher das Magnetfeld, dem es an seiner Stapelposition ausgesetzt ist. Dieser Effekt muss bei der Berechnung der Stromtragfähigkeit des Gesamtsystems immer berücksichtigt werden, wird aber in der folgenden Beschreibung der Einfachheit und Verständlichkeit wegen ausgelassen. Um die Stromtragfähigkeit des späteren Gesamtsystems nicht negativ zu beeinflussen, dürfen auch im Verbinder die Abstände der einzelnen HTSL-Bänder nicht geringer werden als im weiteren Schienenverlauf. Es darf kein Flaschenhals entstehen, Aufweitungen dagegen sind unkritisch und stellen kein Problem dar.

Für die Übertragung von hohen bis sehr hohen Strömen im Kiloampere- bis hin zum Megaamperebereich ist es für die Anwendungen der Hochtemperatursupraleitung aufgrund der Gleichung zur Verlustleistung Pᵥ = I²xR notwendig, an den Verbindungstellen der Supraleiter einen sehr kleinen elektrischen Widerstand zu haben. Für den Kiloamperebereich soll er im Bereich von weniger als 5 Nano-Ohm (5 nΩ) liegen, da sonst eine zu große Wärmeentwicklung aufwendig von den HTSL weggekühlt werden müsste. Durch die erforderliche, höhere Kühlleistung würden die Betriebskosten des Systems ansteigen. Außerdem würde die Stromtragfähigkeit der HTSL leiden und in der Folge müssten mehr HTSL-Bänder eingebaut werden, was wiederum die Systemkosten signifikant erhöhen würde. Den sehr niedrigen Widerstand kann man nur erreichen, wenn es eine supraleitende Verbindung oder zumindest eine extrem niederohmige metallisch-stoffliche Verbindung zwischen den Gutseiten der HTSL-Bänder gibt. Dafür kommt das Weichlöten mit niedrig schmelzenden Loten in Betracht, da man damit sehr dünne Übergangsschichten herstellen kann ohne den HTSL durch zu hohe, lang anstehende Temperaturen mittels thermischer Degradation zu schädigen und damit in seiner Stromtragfähigkeit zu beeinträchtigen. Es kann mit vertretbarem Aufwand ein Widerstandswert in der Größenordnung von 100 nΩ auf einem Quadratzentimeter Verbindungsfläche zwischen zwei HTSL-Bändern erreicht werden, so dass durch Vergrößerung der Verbindungsfläche und Parallelschaltung von vielen HTSL Bändern ein niedriger Gesamtwiderstand erreicht werden kann. Beispielsweise ergibt sich bei 5 cm Überlappungslänge und 50 parallelen 12mm breiten Bändern folglich ein theoretischer Gesamtwiderstand von nur 0,33 nΩ.

Um die Kosten für den Einsatz der HTSL-Bänder möglichst gering zu halten, wird versucht auch den die Mindeststromtragfähigkeit übersteigenden Teil des kritischen Stroms auszunutzen. Daher wird angestrebt in jedem Systemelement des Stromschienensystems, den Strom energetisch optimal auf die HTSL Bänder zu verteilen. Dazu müssen beim Übergang von einem Systemelement zu Nächsten Ausgleichströme zwischen den Supraleitern fließen können. Die mittlere Stromtragfähigkeit der einzelnen HTSL Bänder wird als kritischer Strom Ic bezeichnet. Sie übersteigt in aller Regel die von den Lieferanten geforderte Mindeststromtragfähigkeit Icmin, die sich dadurch ergibt, dass es lokal begrenzte Stellen mit Einbrüchen bei der Stromtragfähigkeit gibt. Diese Stellen erststecken sich über wenige Zehntel Millimeter bis auf wenige Millimeter. Bei HTSL-Material mit wenigen Fehlstellen auf 1.000 Metern Länge oder sehr kleinen Einbrüchen spricht man von einer guten Homogenität. Bei vielen Fehlstellen oder größeren Einbrüchen spricht man von inhomogenem Material. Sehr große Einbrüche werden herausgeschnitten. Selbst bei inhomogenem Material kommen daher nur verhältnismäßig wenig Fehlstellen auf den wenige Meter langen HTSL-Bandabschnitten der Systemelemente vor, die die Stromtragfähigkeit limitieren und verhindern können, dass die volle mittlere Stromtragfähigkeit Ic ausgenutzt werden kann. Sie lassen sich aber nicht ganz ausschließen. Es ist daher notwendig an den Verbindungsstellen eine Umverteilung der über den Icmin hinausgehenden Ströme von den einen HTSL-Bändern mit Ic zum den anderen mit Ic zu ermöglichen, was erhöhten Verbindungsaufwand bedeutet.

Die HTSL-Stapel bzw. -Stränge, die den Strom durch das supraleitende Stromschienensystem leiten, bestehen aus einer Vielzahl von einzelnen HTSL-Bändern, etwa um Zwanzig bis mehrere Hundert, je nach Temperatur und erforderlicher zu übertragender Stromstärke. Jeden einzelnen HTSL auf einer Baustelle miteinander zu verbinden und dabei eine hohe Qualitätsanforderung zu erfüllen, stellt eine kostenintensive Herausforderung dar. Das gilt ganz besonders, wenn es sich um sehr viele HTSL-Bänder handelt. Ein weiteres Ziel ist es also auf der Baustelle eine einfache, schnelle, sichere und qualitativ hochwertige Verbindung zu ermöglichen, indem die anspruchsvolle Vorbereitung der Verbindungsherstellung unter definierten Bedingungen im Rahmen einer Vorkonfektion in geeigneten Werkräumen sichergestellt werden kann.

WO 2016/077662 A1, JP 2015 211009 A, JP H07 263045 A, JP 2015 006076 A offenbaren die Verbindung von HTSL Kabeln.

Eine gattungsgemäße Stromschiene offenbaren die folgenden Veröffentlichungen:
- B.N. SORBOM ET AL: "ARC: A compact, high-field, fusion nuclear science facility and demonstration power plant with demountable magnets", FUSION ENGINEERING AND DESIGN., Bd. 100, November 2015 (2015-11), Seiten 378-405,
- M Takayasu ET AL: "Termination Methods for REBCO Tape High-Current Cable Conductors",
- MANGIAROTTI F J ET AL: "Demountable Toroidal Field Magnets for Use in a Compact Modular Fusion Reactor", JOURNAL OF PHYSICS: CONFERENCE SERIES, INSTITUTE OF PHYSICS PUBLISHING, BRISTOL, GB, Bd. 507, Nr. 3, 12. Mai 2014 (2014-05-12), Seite 32030.

Es ist daher Aufgabe der vorliegenden Erfindung ein verbessertes Stromschienensystemelement mit einem Verbindungsstück sowie eine Stromschiene mit einer Vielzahl von solchen Stromschienensystemelementen anzugeben.

Diese Aufgabe wird gelöst durch ein Stromschienensystemelement mit einem Verbindungsstück mit den Merkmalen des Hauptanspruchs sowie einer Stromschiene mit einer Vielzahl von solchen Stromschienensystemelementen mit den Merkmalen des nebengeordneten Anspruchs. Vorteilhafte Ausgestaltungen sind Gegenstand der Unteransprüche.

Das vorgeschlagene Stromschienensystemelement weist zunächst ein Stabilität gebendes und den Kryostat bildendes Gehäuse auf, welches sich entlang des Stromschienensystemelements erstreckt. Ein Supraleiterstrang verläuft im Gehäuse entlang des Gehäuses und steht am seinen Enden vorzugsweise über das Gehäuse hinaus. Wie in der Einleitung beschrieben weist der Supraleiterstrang eine Vielzahl nebeneinander verlaufender HTSL-Bänder auf. Nebeneinander bedeutet in der Regel, dass die Bänder gestapelt sind, gegebenenfalls unter Einhaltung gewisser Abstände, damit das Magnetfeld nicht die Stromtragfähigkeit des Gesamtsystems unerwünscht stark reduziert. Mehrere derartige Stapel können wiederum nebeneinander angeordnet sein. Jedes der HTSL Bänder weist nun eine Gutseite mit einem keramischen Material als HTSL sowie eine der Gutseite abgewandte Rückseite auf. Unter diese Formulierung fällt demzufolge sowohl das Einzelleiter-Band mit einseitig HTSL beschichteten Träger, also auch das Doppelleiterband mit HTSL Schichten auf beiden Seiten des HTSL Bandes. Daher bildet beim Doppelband eine der beiden Gutseiten auch die Rückseite.

Ferner ist ein Verbindungsstück am Ende des Supraleiterstrangs vorgesehen, der typischerweise das Gehäuse überragt. Das Verbindungsstück dient dem elektrischen Verbinden des Supraleiterstrangs mit einem weiteren Supraleiterstrang eines weiteren Stromschienensystemelements mit einem passenden Gegenverbindungsstück. Beim Stand der Technik bildet das Ende der HTSL Bänder jeweils ein solches Verbindungsstück, wobei aber mühsam und kaum reproduzierbar Band für Band verlötet werden muss.

Erfindungsgemäß ist nun als Besonderheit ein spezielles Verbindungsstück vorgesehen, auf welchem die Rückseiten der Enden der HTSL Bänder befestigt sind. Dieses Merkmal erlaubt das Kontaktieren ohne Einzelhandhabung jedes Endes des HTSL Bänder.

Dabei ist das Verbindungsstück derart ausgelegt, dass ein Verbinden zweier - vorzugsweise gleichartiger - Verbindungstücke in einer Richtung senkrecht zur Längsachse des Stromschienensystemelements möglich ist. Im Gegensatz zu bekannten Steckersystemen müssen bei der Montage, oder noch ungünstiger, beim Entnehmen aus einer montierten Stromschienenstrecke, keine Schienen in Längsrichtung bewegt werden.

Dies ermöglicht Verfahren zum platzsparenden, besonders niederohmigen Verbinden von HTSL-Bändern untereinander. Der erfindungsgemäße Verbinder ermöglicht erstmals in der Supraleitertechnik ein schnelles, gleichzeitiges und sicheres Verbinden von sehr vielen HTSL-Bändern in "Face to Face"- Technik ohne aufwändige Spleißarbeiten beim Einbau auf der Baustelle durch sehr teure, erfahrene Anwendungsspezialisten. Der Verbinder ermöglicht es, Systemelemente eines fertig montierten Systems senkrecht zur Längsachse zu montieren oder zu entnehmen ohne die Nachbarelemente demontieren zu müssen, was sich bei langen Strecken sehr positiv auf die Kosten eines möglichen Defekts in einem Systemelement auswirkt. Die im Verbindungsstück werkseitig unter kontrollierten Bedingungen aufgespleißten und fixierten HTSL Enden bilden eine Strombrücke mit großflächigen Kontakten zw. HTSL und gegebenenfalls Stromausgleichselementen. Die handhabungsempfindlichen HTSL Einzelbänder des instabilen Stapels werden daher zu steckbarem HTSL- Kontakt zusammengefasst.

Erfindungsgemäß weist aber das Verbindungsstück eine Vielzahl von kammartig parallel zueinander angeordneten Keilen auf, deren geneigten Seitenflächen unter einem Winkel vorzugsweise kleiner als 10° zusammenlaufen. Ähnlich wie zwei ineinandergreifende Zahnstangen, greifen die Kammzähne ineinander. Da auf den Seitenflächen der Keile die Rückseiten des Endes der HTSL Bänder befestigt sind, erfolgt eine Keil typische Kraftverstärkung: Ein leichtes Zusammenpressen der aufeinander gelegten gleichartigen Verbindungsstücke erzeugt einen starken Anpressdruck auf die sich überlappenden HTSL Bänder.

Wenn die Breite der Keile sich jeweils entlang des Verlaufs des Endes der HTSL Bänder erstreckt, ist ein Verbinden zweier Verbindungstücke in einer Richtung senkrecht zur Längsachse des Stromschienensystemelements möglich. Darüber hinaus kann über die Breite des Keils, welche hier der Länge des im Verbindungselement gehaltenen HTSL Bandes entspricht, die Länge und damit der Querschnitt der Überlappung definiert werden. Diese bestimmt die Stromtragfähigkeit und den elektrischen Widerstand der Verbindung.

Zur Erreichung der Steckbarkeit der Verbindung sind vorzugsweise die Abstände der parallel zueinander angeordneten Keile mit den daran befestigten HTSL Bändern am Verbindungsstück wie folgt auszulegen: Wenn ein gleichartiges mit HTSL-Bändern versehenes Gegenverbindungsstück elektrisch leitend mit dem Verbindungsstück in einer Kontaktzone verbunden wird, dann soll mindestens ein Gegenkeil des Gegenverbindungsstücks in den Zwischenraum zwischen benachbarten Keilen des Verbindungsstücks passen. Dabei liegen zumindest in der Kontaktzone die Gutflächen an den Seitenflächen am Gegenkeil gegen die jeweiligen Gutflächen an den Seitenflächen der benachbarten Keile an. Eine Kontaktzone ist der Bereich, in dem beim Herstellen der Verbindung zwischen zwei Kontaktelementen, die Gutseiten zweiter in Überlappung gebrachten HTSL Bänder unmittelbar in Kontakt stehen, gegebenenfalls lediglich abgesehen von einer Lotschicht und/oder anderen dünnen HTSL Band typischen Schichten.

Wenn vorzugsweise das Verbindungsstück derart ausgelegt ist, dass eine elektrische Verbindung durch eine Bewegung und Andrücken in Keilrichtung relativ zu einem gleichartigen Gegenkontaktstück erfolgen kann, ergibt sich die oben genannte Kraftverstärkung, die insbesondere der später vorgeschlagenen Lotverteilung zu Gute kommt. Die geringe Montagekraft erzeigt einen hohen Kontaktdruck und eignet sich gegebenenfalls auch als Steckverbinder ohne Lötung.

Vorzugsweise sind die Spitzen der Keile abgeflacht, damit diese kompakter und fester sind. Dies dient im Fall der HTSL Einzelleiter-Bänder der Genauigkeit der Verbindung. Bei der Auslegung mit HTSL Doppelleiter-Bänder stellt diese Zone die später erläuterte Nebenkontaktzone dar.

Besonders ist allerdings, dass die Gutflächen beim Kontaktschluss miteinander verlötet werden, um die in der Einleitung diskutierten minimalen Widerstandswerte einzuhalten. Dazu weisen bereits werkseitig die HTSL Bänder eine Lotschicht auf, zumindest in dem Abschnitt, welcher zum elektrisch leitenden Verbinden mit HTSL Bändern einer gleichartigen Gegenverbindung vorgesehen sind. Grundsätzlich entspricht dieser Abschnitt auch der Mindestbreite der Keile, auf welchem die HTSL Bänder befestigt sind. Zum Verbinden werden also die ineinander gedrückten Kontaktstücke erwärmt, damit die Lotschicht aufschmilzt. Es ergibt sich eine schonende Kontaktierung der druckempfindlichen HTSL Bänder, da es kaum noch Relativbewegung gibt, sobald der Druck aufgebaut ist. Das im Lötprozess flüssige Lot stellt während der Bewegung eine Art "hydrodynamische Lagerung" dar, wie das Öl in einem Gleitlager bei Nenndrehzahl. Beim Aufsetzen der Kontaktbereiche hört dann die Bewegung auf und die HTS-Leiter sind nach dem Erkalten des Lots in der Kontaktzone fixiert. Über eine definiert vorgewärmte, thermisch kontrollierte Lötvorrichtung kann somit die notwendige Wärmemenge eingebracht werden, die ausreichend zum Verlöten und gering genug ist, um Thermoschäden am HTSL Band zu vermeiden. Eine Temperaturkontrolle der HTSL im zeitlichen Verlauf ist wichtig, da bei Temperaturen über 150°C und einer Dauer von > 1 Minute schon Degradation erfolgen kann. Zusammen mit der vorheizbaren Lötvorrichtung kann eine gleichmäßige Wärmeverteilung stattfinden, da alle Leiter gleichzeitig gelötet werden sollen. Diese Lötvorrichtung ermöglicht einen gleichmäßigen Kontaktdruck beim Löten, welcher wichtig bei sehr druckempfindlichen HTSL-Bändern, besonders auf NiW-Substraten, ist.

Weiterhin kann es von Vorteil sein, wenn die Breite der Keile auch über die Breite der Kontaktzone hinaus geht, ebenso wie die Lotschicht. Vorzugsweise erstrecken sich diese Keile über die gesamte Länge, auf der die HTSL Bänder auf den Seitenflächen befestigt sind. Die Breite der Keile bzw. die Lotschicht geht also über die reine Kontaktzone heraus und schafft Raum für eine einfache technische Umsetzung eines Stromausgleichs:
Dazu weist das Verbindungsstück ein elektrisch leitfähiges Stromausgleichsstück auf, welches die Gutflächen der an den geneigten Seitenflächen der parallel angeordneten Keile befestigten HTSL Bänder elektrisch leitend miteinander verbindet. Das Stromausgleichsstück wird dabei dort eingesetzt, wo die HTSL Bänder nicht überlappen sollen, also außerhalb der Kontaktzone. Dabei weist das Stromausgleichsstück eine im dem Gegenkontaktstück vergleichbare Geometrie auf und ist ebenfalls zum Einsetzten in zwischen die Gutflächen der HTSL Bänder bestimmt. Das Stromausgleichsstück weist also Keile auf, die zwischen zwei gegenüberstehenden benachbarten Gutflächen an diesen flächig elektrisch leitend anliegen. Zweckmäßigerweise sind diese ebenfalls mit diesen verlötet, was aber nicht baustellenseitig erfolgen muss, sondern werksseitig unter gut kontrollierbaren Bedingungen. Damit beim baustellenseitigen Verlöten der Kontaktstücke miteinander, das Stromausgleichsstück nicht gelöst wird, liegt entweder die Schmelztemperatur des Lots mindestens um 20K oberhalb der Schmelztemperatur der Lotschicht, welche auf der Gutseite der HTSL Bänder in dem Abschnitt, welcher zum elektrisch leitenden Verbinden mit HTSL Bändern einer gleichartigen Gegenverbindung vorgesehen ist oder werden bei gleicher Schmelztemperatur der Lote die Stromausgleichstücke beim Verlöten der Kontaktzonen ausreichend heruntergekühlt.

Wenn dabei mehrere nebeneinander verlaufende Supraleiterstränge mit jeweils einem Verbindungsstück am Ende der Supraleiterstränge vorgesehen sind, wobei an jedem Verbindungsstück ein Stromausgleichsstück befestigt ist, können vorzugsweise auch die Stromausgleichsstücke untereinander und miteinander elektrisch leitend verbunden sein. Es wird ein Stromausgleich zwischen den Strängen herbeigeführt.

Die folgenden Merkmale gelten für die Verwendung von Einzelleiter HTSL Bändern, mit nur einer Gutseite. Dabei ist die Rückseite jedes HTSL Bandes als Träger bzw. Substrat ausgebildet. Die Rückseite ist daher relativ hochohmig und trägt nicht zu Stromtragfähigkeit bei. Vorzugsweise ist daher das mit HTSL Bändern versehene Verbindungsstück derart, dass wenn es mit einem gleichartigen mit HTSL Bändern versehenen Gegenverbindungsstück elektrisch leitend in der Kontaktzone verbunden ist, das Verbindungsstück und das Gegenverbindungsstück sich ausschließlich in der Kontaktzone gegeneinander abstützen. Dadurch wird beim Verlöten optimal viel Lot aus der Kontaktzone gepresst und der Übergangswiderstand ist minimiert. Der Stromfluss erfolgt also ausschließlich im Bereich der überlappenden HTSL Bänder. Wenn die die Tiefe des Keils um 5 - 25 % größer als die Breite der HTSL Bänder ist, ergibt sich ein Freiraum zur Aufnahme des verdrängten Lots.

Die folgenden Merkmale gelten für die Verwendung von Doppelleiter HTSL Bändern, mit zwei Gutseiten. Dabei ist auch die Rückseite jedes HTSL Bandes als Gutseite ausgebildet, meist mit mindestens einer oder zwei Lagen eines Trägers dazwischen. Da die rückseitige Gutseite auch mit dem Gegenkontaktstück elektrisch verbunden werden muss, sind auch die Rückseiten der HTSL Bänder mit den Seitenflächen elektrisch leitend verbunden, z. B.: durch eine Lotschicht verlötet. Dabei müssen allerdings auch die miteinander verbundenen Kontaktstücke über die Kontaktzone hinaus in einer Nebenkontaktzone miteinander verbunden werden. Dazu ist erforderliche, dass das Verbindungsstück zumindest im Bereich der Keile elektrisch leitend ist; und das mit HTSL Bändern versehene Verbindungsstück derart ist, dass wenn es mit einem gleichartigen mit HTSL Bändern versehenen Gegenverbindungsstück elektrisch leitend in der Kontaktzone verbunden ist, das Verbindungsstück und das Gegenverbindungsstück sich abseits dieser Kontaktzone in Nebenkontaktzonen gegeneinander abstützen und elektrisch leitend miteinander verbunden werden können. Auch die Nebenkontaktzonen können miteinander verlötet sein. Wenn die die Tiefe des Keils nur um 1-5 % größer als die Breite der HTSL Bänder ist, ergibt sich eine Möglichkeit, dass das freie Ende des Keils gegen das Material des Gegenkontaktstücks drückt und somit die Nebenkontaktzone bildet.

Die folgenden Merkmale gelten für die Verwendung von Einzelleiter und/oder Doppelleiter HTSL Bändern.

Vorzugsweise wird eine Stromschiene mit einer Vielzahl von erfindungsgemäßen Stromschienensystemelementen vorgeschlagen, welche an ihren jeweiligen Verbindungsstücken miteinander verbunden sind. Die überlappenden Gutseiten der Enden der HTSL Bänder sind durch Verlöten der Lötschicht elektrisch leitend miteinander verbunden. Im Fall der Doppelleiter HTSL Bänder sind gegebenenfalls die Verbindungsstücke im Bereich der Nebenkontaktzonen miteinander verlötet.

Da die Übergangswiderstände bei den hier beschriebenen Hochstromanwendungen zu minimieren sind, wird der Fachmann normalerweise nur gleich breite HTSL-Bänder überlappend verbinden, zum Beispiel 10mm mit 10mm. In Versuchen hat sich überraschenderweise gezeigt, dass dieser Einfluss in der Praxis kaum relevant ist, sofern die Breite des schmaleren Bandes mindestens 50%, vorzugsweise 70% der Breite des breiteren Bandes beträgt. Dies gilt auch beim Übergang von Einzelleitern auf Doppelleiter. Diese Erkenntnis ermöglicht aus Wirtschaftlichkeits- oder Verfügbarkeitsgründen, den Übergang zwischen HTSL-Bändern unterschiedlicher Hersteller, Chargen und Dimensionen.

Allgemein besteht das Prinzip der Erfindung in einer speziellen Anordnung der elektrischen Kontaktzonen von einer Vielzahl miteinander elektrisch verbundenen flächigen Supraleitern, welche an Verbindungsstücken angeordnet sind. Dabei sind die von den flächigen Supraleitern gebildeten Kontaktzonen unter einem Winkel kleiner 20°, vorzugsweise 10° und größer als 1° zueinander ausgebildet.

Bisher wurde beschrieben, dass eine elektrische Verbindung benachbarter Verbindungsstücke unmittelbar erfolgt, d. h. zur elektrischen Kontaktierung wurden die Keile der Verbindungsstücke kämmend unmittelbar ineinander gesteckt. Wegen der Empfindlichkeit der auf den Seitenflächen der Keile befindlichen HTSL Bänder, ist jedoch ein sehr gefühlvolles Zusammenführen der Keile nötig, um Schäden an den HTSL Bändern zu verhindern. Da aber die Verbindungsstücke mit längeren Stromschienensystemelementen verbunden sind, erfordert das Verbinden jedoch viel Kraft, so dass Beschädigungen möglich sind. Daher wird im Folgenden ein separates Kupplungsstück vorgeschlagen, welches zum Verbinden der bisher beschriebenen und vollkommen unveränderten Verbindungsstücke eingesetzt werden kann. Letztere werden nun jedoch nicht unmittelbar ineinandergesteckt:
Das Kupplungsstück entspricht von der Funktion her genau dem bislang beschriebenen Verbindungsstück, mit dem einzigen Unterschied, dass die auf den Seitenflächen aufgebrachten HTSL Bänder lediglich der elektrischen Verbindung der HTSL Bänder von zwei benachbarten Verbindungsstücken dienen. Da das Kupplungsstück klein und leicht ist, kann es gefühlvoller eingesetzt werden.

Dabei sind die beiden zu kuppelnden Verbindungsstücke in ihrer Längsachsenrichtung hintereinander angeordnet und stehen sich stirnseitig gegenüber, wobei die kammartig parallel zueinander angeordnete Keile miteinander fluchten.

Die derart angeordneten zu kuppelnden Verbindungsstücke werden nun von dem Kupplungsstück verbunden, welches eine Vielzahl von kammartig in Längsrichtung des Kupplungsstücks verlaufende parallel zueinander angeordnete Keilen aufweist. Auf den Seitenflächen sind weitere HTSL-Bänder vorgesehen, was somit dem Aufbau der Verbindungsstücke entspricht.

Das Kupplungsstück kann mit seinen Keilen kämmend in die von den miteinander fluchtenden Keile der Verbindungsstücke gebildeten Zwischenräume eingesetzt werden. So dass die Gutseiten der weiteren HTSL-Bänder die Gutseiten der miteinander fluchtenden HTLS Bänder jeweils elektrisch leitend miteinander verbinden.

Das erfindungsgemäße Verfahren zum Verbinden von zwei Stromschienensystemelementen umfasst die folgenden Schritte:
- Anordnen von zwei Stromschienensystemelementen in ihrer Längsachsenrichtung hintereinander;
- Ausrichten mindestens eines Stromschienensystemelements so, dass die Verbindungsstücke (41,51) sich stirnseitig gegenüberstehen;
- Ausrichten mindestens eines Stromschienensystemelements, dass die kammartig parallel zueinander angeordnete Keile der beiden Verbindungsstücke (41,51) miteinander fluchten;
- Bereitstellen eines Kupplungsstücks (100) mit einer Vielzahl von kammartig in Längsrichtung des Kupplungsstücks verlaufende parallel zueinander angeordneten Keilen aufweist, deren geneigte Seitenflächen (144) unter einem Winkel vorzugsweise kleiner 10° zusammenlaufen, wobei das Kupplungsstück (100) auf den Seitenflächen (144) weitere HTSL-Bänder (160) aufweist, welche eine Gutseite mit einem keramischen Material als HTSL sowie eine der Gutseite abgewandte Rückseite umfassten, wobei die Rückseiten der weiteren HTSL Bänder (160) auf den Seitenflächen (144) befestigt sind und sich die weiteren HTSL Bänder (160) entlang der Breite des Keils erstrecken, wobei das Kupplungsstück an die Geometrie der beiden Verbindungsstücke (41,51) angepasst ist, sodass das Kupplungsstück (100) mit seinen Keilen kämmend in die von den miteinander fluchtenden Keile der Verbindungsstücke (41,51) gebildeten Zwischenräume eingesetzt werden kann, wobei die Gutseiten der weiteren HTSL-Bänder (160) die Gutseiten der miteinander fluchtenden HTLS Bänder (61,62) jeweils elektrisch leitend miteinander verbinden;
- verkantetes Einsetzen des Kupplungsstücks (100) zuerst lediglich an einer seiner Kanten, wobei nur alle Enden der Keile an der Kante des Kupplungsstücks in die Zwischenräume zwischen den Keilen eines der Verbindungsstücke (41) eingesetzt werden; und
- anschließendes Einschwenken des Kupplungsstücks (100), wobei mit der Drehung anwachsend die Keile von der Kante her immer weiter in die Zwischenräume zwischen den Keilen der beiden Verbindungsstücke (41, 51) eingeschwenkt werden.

Dadurch wird ein langsames gefühlvolles Einschwenken des Kupplungsstückes ermöglicht. Es kommt insbesondere nicht zu Stoßen oder unkontrollierter Kraftanwendung, da der Kontakt allmählich hergestellt wird. Auch bei Anwendung des Kupplungsstücks wird wie oben beschrieben eine Verlötung erfolgen. Im Folgenden wird die Erfindung anhand von Figuren erläutert.

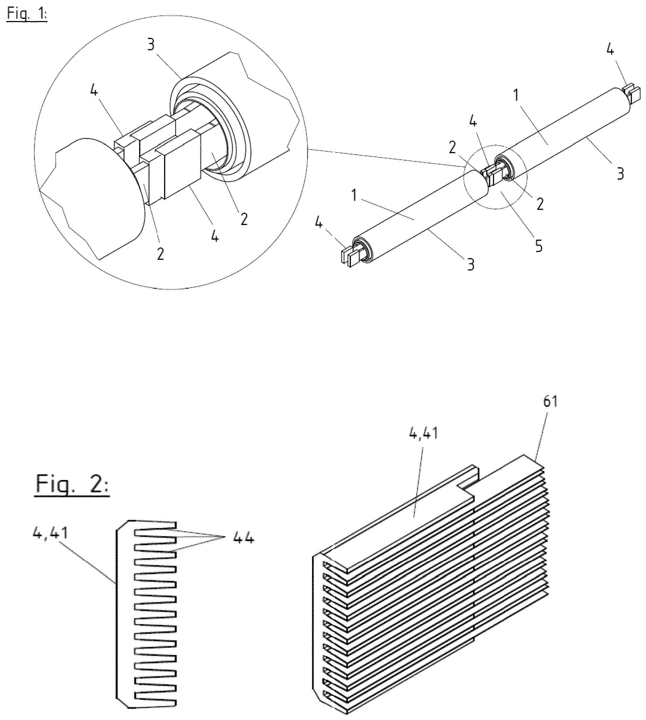

Fig. 1 zeigt eine Verbindungsstelle 5 eines Stromschienensystemelements 1 mit Gehäuse und noch offenem Rohrkryostaten 3. An den Enden der schematisch dargestellten Stromschienenelemente 1 ragen die Supraleiterstränge 2 mit einem Stapel von HTSL-Bändern über den Kryostaten 3 hinaus. Die einzelnen HTSL-Bänder werden überlappend miteinander verbunden, um den Strom von einem zum nächsten Band zu übertragen. Erfindungsgemäß werden die zuvor beschriebenen Anforderungen dadurch gelöst, dass an die HTSL-Bänder der Stränge 2 Verbindungsstücke 4 angebracht werden, mit denen die einzelnen HTSL-Bänder stofflich verbunden werden.

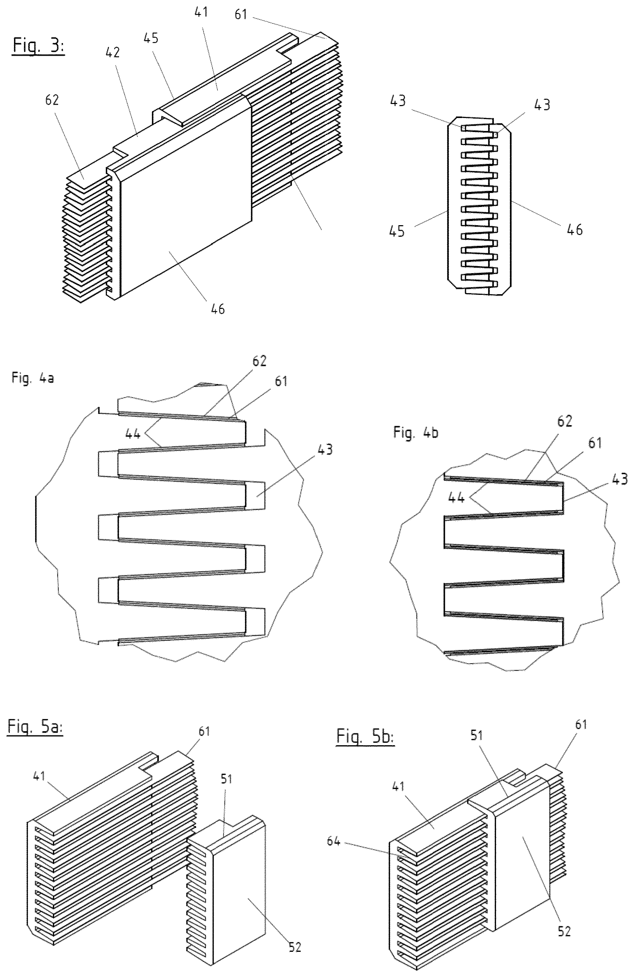

Jeder Supraleiterstrang eines Systemelements endet in einem Verbindungsstück 4 mit einem Trägerbauteil 41 mit kammförmig angeordneten Keilen gemäß Fig. 2. Auf den Seitenflächen 44 der Keile sind die HTSL-Bänder 6 jeweils mit ihrer Rückseite auf der gesamten Länge des Trägerbauteils 41 angebracht. Die Gutseite zeigt in Richtung der Öffnung zwischen den Keilen. Für mehrpolige Verbindung besteht das Verbindungsstück 4 bzw. das Trägerbauteil 41 aus nichtleitendem Material, wie z.B. faserverstärkte Duroplaste oder Keramik. Die Befestigung der HTSL Bänder erfolgt dann durch adhäsive Verfahren. Für monopolare Verbindungen besteht das Trägerbauteil 41 wahlweise aus elektrisch leitendem, lötfähigem Material, wie beispielsweise Kupfer oder verkupfertem Aluminium. Die Befestigung erfolgt dann durch Löten. Die Abstände der Keile sind so gewählt, dass ein gleichartiges zweites, mit HTSL-Bändern 62 bestücktes, Trägerbauteil 42 als Gegenkontaktstück montiert wird und mit seinen Gegenkeilen in die Zwischenräume der Keile des ersten Trägerbauteils 41 passt, wie in Fig. 3 dargestellt.

Fig. 4a zeigt die Keile mit den Seitenflächen 44 und den darauf befestigten HTSL Bändern 61 und Gegen-HTLS-Bändern 62 in Form von Einzelleitern im Detail. Die Seitenflächen 44 sind breiter als die HTSL Bänder, so dass an der Keilspitze noch Freiraum 43 für gegebenenfalls verdrängtes Lot ist: Die notwendige Löttechnik zum Erreichen des oben beschriebenen Widerstandswertes in der Größenordnung von 100 nΩcm² für die überlappende Verbindung der HTSL-Gutseiten erfordert einen gleichmäßigen Druck auf jeder Lötstelle mit der Möglichkeit die Lotdicke in der Fügestelle auf ein Minimum von etwa 3-30µm zu reduzieren. Überschüssiges Lot soll herausgedrückt werden und dabei dafür sorgen, dass Flussmittelreste, Oxidationsprodukte und Gasblasen, die sich zwischen den Fügeflächen befinden können, herausgespült werden. Durch Druckkraft auf den Rückseiten 45, 46 der Verbindungsstücke 4, 41, 42 wird durch die Keilform der Seitenflächen 44 Druck auf die HTSL-Bänder, das Lot und die Seitenflächen 44 der Keile ausgeübt. Beim Löten wird der Lötspalt verkleinert und Lot tritt dann seitlich aus. Störende Blasen oder Fremdstoffe werden herausgespült. Die Höhe der Keile wird wiederum so gewählt, dass nach der Montage des Gegenstücks 42 im Fußbereich der Keile genügend Spiel 43 vorhanden ist. Beim Verlöten steht dann im Falle von seitlichem Druck auf die Keile dem ausfließenden Lot eine Drainage zu Verfügung und infolge der Druckbeaufschlagung auf den Rücken der Verbindungsstücke und der Nachgiebigkeit des flüssig gewordenen Lotes kann ein ausreichendes Zusammenschieben der Verbindungsstücke erfolgen, ohne dass sich die Spitzen der Keile auf dem gegenüberliegenden Grund abstützen können. Das ist notwendig, um den Abstand zwischen den Seitenflächen der Keile soweit reduzieren zu können, dass sich der gewünschte minimale Lötspalt von nur 3-30µm ungehindert einstellen kann.

Im Fall der Verwendung von druckempfindlichen Doppelleitern 61, 62, wie in Fig. 4b im Detail gezeigt, statt druckunempfindlicher Einzelleiter verändern sich die Anforderungen an die Kontaktstücke. Dann ist es zusätzlich erforderlich, dass die an den Seitenflächen 44 der Keile angelöteten Gutseiten auf kürzestem Weg und somit mit geringstem Widerstand ihren Strom an die Doppelleiter des korrespondierenden Gegenkontaktstücks 42 übertragen können. Das wird dadurch möglich, dass die Geometrie der Keile und der Keillücken so verändert wird, dass sich im verlöteten Zustand die Keilspitzen mit einer Lotzwischenschicht auf dem Keilgrund des Gegenstücks abstützen. Das Spiel 43 im Keilfuß ist in diesem Fall nicht erwünscht und wird Null. Dadurch wird beim Lötvorgang der Druck auf die Seitenflächen der Keile bis auf nahe Null verkleinert und die Zahnspitze mit dem Zahngrund verlötet. Es ergibt sich eine sehr kurze elektrisch leitende Verbindung zwischen den durch den Doppelleiter kontaktierten Seitenflächen 44. Der Strom kann so an der Verbindungsstelle von einer Seite auf die nächste Seite kommutieren. Die Schichtdicke der fertigen Verlötung zwischen den direkt kontaktierten Gutseiten der Doppelleiter wird größer als bei der weiter oben beschrieben Kontaktierung mit Einzelleitern, bleibt aber trotzdem ungefähr 30% bis 70% unter der ursprünglichen Dicke des vor dem Lötvorgang eingelegten Lotbandes, so dass auch bei der Verwendung der geänderten Geometrie der Verbinderteile zusammen mit dem Doppelleiter Lot aus dem Spalt herausgedrückt werden muss und sich somit ein Spüleffekt ergibt.

Die einzelnen HTSL-Bänder der Systemelemente weisen unterschiedliche Stromtragfähigkeiten auf. Um Ausgleichströme zwischen den Supraleitern innerhalb einer Stapelverbindung zu ermöglichen werden die Gutseiten 64 der einzelnen Supraleiter mit einem metallischen Stromausgleichsstück 51 kontaktiert, wie in Fig. 5a und 5b gezeigt. Dadurch wird eine Art elektrischer Knotenpunkt geschaffen und im Fall von unterschiedlichen Stromtragfähigkeiten durch Einbrüche im Verlauf der einzelnen HTSL-Bänder des Stromschienenelements, wird an der Elementverbindung ein Ausgleichstrom über das Stromausgleichsstück 51 fließen. Somit kann sich der Strom beim Übergang in das nächste Systemelement, bei dem die Verteilung der maximalen Stromtragfähigkeit der HTSL-Bänder etwas anders vorliegt, neu aufteilen. Das hat den Vorteil, dass nicht nur die garantierte Mindeststromtragfähigkeit eines jeden HTSL-Bandes ausgenutzt werden kann, sondern auch die darüber hinaus gehende, statistisch verteilt auf jedem Band unterschiedliche, maximale Stromtragfähigkeit ausgenutzt werden kann. So wird die Stromtragfähigkeit des Gesamtsystems erhöht, was es wiederum erlaubt, die notwendigen Sicherheitsreserven knapper auszulegen.

Im Fall der Verwendung von Doppelleitern müssen die Verbindungsstücke aus leitendem Material bestehen, um einen Ausgleichstrom zwischen den an den Seitenflächen der Keile angelöteten Gutseiten der Doppelleiter zu führen.

Der Verbindungswiderstand wird durch den Übergangswiderstand von HTSL und stabilisierende Hülle, sowie durch die Widerstände des Materials des Verbindungsstücks bzw. der Keile und des Lotes festgelegt. Wegen der großen Verbindungsflächen vom mehreren Quadratzentimetern, dem vergleichsweise großen Querschnitt der Rückseite des Stromausgleichsstücks 51 und dem niedrigen Ausgleichstrom kann die verbleibende Verlustleistung des normalleitenden Teils der Verbindung sehr klein gehalten werden. Darüber hinaus wirkt das zusätzliche Stromausgleichsstücks 51 als weitere stoffschlüssige Befestigung der HTSL-Bänder 61, insbesondere wenn auch das Verbindungsstück eine lötfähige Oberfläche aufweist. Dann erfolgt die Befestigung der HTSL-Bänder auf dem Trägerbauteil 41 und das Verlöten des Stromausgleichsstücks 51 in einem einzigen kostensparenden Arbeitsgang. Durch diesen Vorgang entsteht ein massives einfach handhabbares Ende des HTSL-Stapels, welches in geeigneten Werksräumen als vorkonfektionierte Baugruppe hergestellt und später bei der Installation unter Baustellenbedingungen sehr einfach zur Verbindung der Systemelemente eingesetzt werden kann.

Der Montagevorgang zwischen dem Verbindungsstück und dem Supraleiterstapel teilt sich prinzipiell auf in zwei zeitlich voneinander getrennte Vorgänge: Die erste Verbindungsherstellung nach Fig. 5a und 5b erfolgt in den Werkräumen: Dieser erste Vorgang beschreibt die Verbindung des Verbindungsstücks 41, insbesondere den Seitenflächen 44 der Keile mit den einzelnen HTSL-Bändern 61 des Supraleiterstrangs im Rahmen des Zusammenbaus eines Systemelements in den Werksräumen. In diesem Arbeitsschritt werden die HTSL-Bänder 61 mit den Verbindungselementen 41 und den Stromausgleichsstücken 51 verbunden. Die Verbindung erfolgt mit einer nicht dargestellten kammförmigen Hilfsvorrichtung mit vorgeheizten Backen, beispielsweise aus einem Aluminiummaterial.

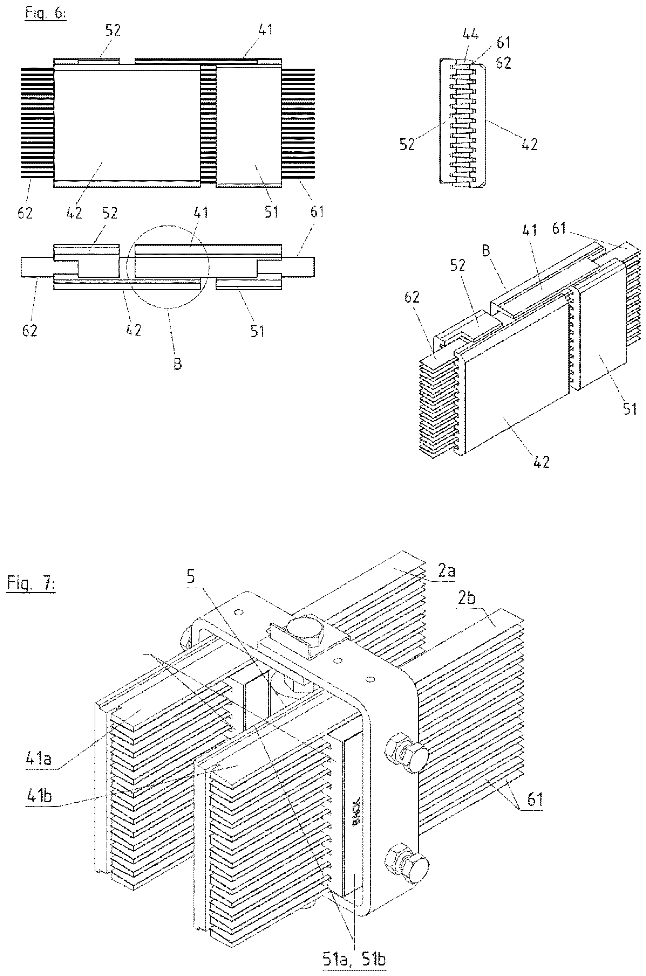

Der zweite Vorgang nach Fig. 6 beschreibt die Verbindung B zweier Stromschienensystemelemente untereinander bei einer Installation auf einer Baustelle im Rahmen des Aufbaus einer supraleitenden Strecke zwischen Stromerzeuger und Stromverbraucher. Hier werden die vorkonfektionierten Verbindungsstücke 41, 42 benachbarter Systemelemente miteinander in Eingriff gebracht und verlötet, so dass an den HTSL-Bändern 61 im Eingriffsbereich B eine überlappende Lötung zwischen den Gutseiten der HTSL-Bänder 61, 62 entsteht. Die Wärme an der neu herzustellenden Lötverbindung in der Kontaktzone B wird mit einer Lötvorrichtung - nicht dargestellt - mittels vorgeheizter, unter Federdruck stehender Lötbacken eingebracht. Die Lötbacken werden elektrisch beheizt, die Temperatur wird gemessen und kontrolliert. Nachdem das Lot geflossen ist wird aktiv und erschütterungsfrei gekühlt. Während der Lötung im Überlappungsbereich B werden an den, im ersten Schritt in den Werksräumen hergestellten Lötstellen, Kühlbacken montiert, so dass sich ein deutliches Temperaturgefälle zwischen bereits bestehender Lötverbindung und der neu herzustellen Lötverbindung ergibt. Damit besteht keine Gefahr, dass sich die erste Lötung unbeabsichtigt löst. Statt der Kühlbacken kommt für den ersten und den zweiten Schritt auch eine Lötung mit Loten unterschiedlicher Schmelztemperaturen in Frage, die sogenannte Stufenlötung. Dabei wird die erste Lötung mit dem höher schmelzenden Lot ausgeführt. Die Temperaturdifferenz sollte dabei ungefähr 20 Kelvin oder höher sein.

Fig. 7 erläutert den Fall von zwei gleichpoligen nebeneinander geführten Stapeln 2a, 2b für die Stromschiene. Es ist es aus Gründen der gleichmäßigen Aufteilung der Ströme auch geboten das Fließen von Ausgleichströmen nicht nur zwischen den HTSL Bändern 61 untereinander, sondern auch zwischen den Stapeln 2a und 2b sicherzustellen. Dazu werden die Stapel 2a, 2b miteinander durch hochleitfähige Stromausgleichskontaktstücke 5 zwischen den Kontaktstücken 41a, 41b und/oder den Stromausgleichsstücken 51am 51b verbunden. Die Verbindung wird so ausgeführt, dass die unterschiedliche Setzung der Verbindungsstücke beim Löten ausgeglichen werden kann. Der Verbindungsquerschnitt richtet sich nach dem zu erwartenden maximalen Ausgleichstrom. Es können auch mehrere Stromausgleichskontaktstücke (5) parallel eingesetzt werden.

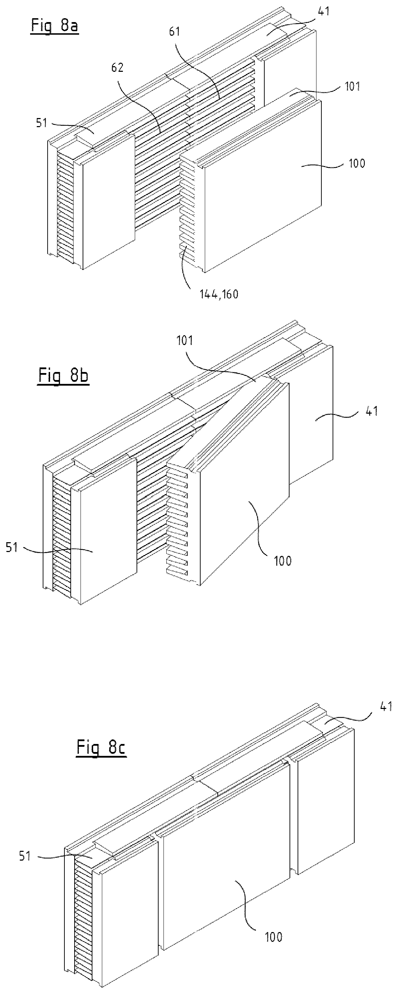

Fig 8 a - c zeigen eine vorteilhafte Ausgestaltung der Erfindung unter Verwendung eines zusätzlichen kompakten Kupplungsstücks 100. Die beiden zu verbindenden Verbindungsstücke 41, 51 der benachbarten Stromschienensystemelemente entsprechen denen aus Fig. 5. Jedoch greifen hier die beiden Verbindungsstücke 41,51 nicht unmittelbar kämmend ineinander, sondern sind so ausgerichtet, dass die Verbindungsstücke 41,51 sich stirnseitig gegenüberstehen. Dabei fluchten die kammartig parallel zueinander angeordnete Keile der beiden Verbindungsstücke 41,51 miteinander, ebenso wie die Gutseiten der miteinander fluchtenden HTLS Bänder 61,62, welche auf den Seitenflächen der Keile angebracht sind.

Das erfindungsgemäße Kupplungsstück 100 hat im Querschnitt das gleiche Profil wie die Verbindungsstücke 41,51, mit einer Vielzahl von kammartig in Längsrichtung des Kupplungsstücks verlaufenden parallel zueinander angeordneten Keilen, deren geneigte Seitenflächen 144 unter einem Winkel kleiner 10° zusammenlaufen. Ebenfalls weist das Kupplungsstück 100 auf den Seitenflächen 144 der Keile weitere HTSL-Bänder 160 auf, mit einer Gutseite sowie eine der Gutseite abgewandte Rückseite. Die Rückseiten der weiteren HTSL Bänder 160 sind auf den Seitenflächen 144 befestigt und erstrecken sich entlang der Breite des Keile. Das Kupplungsstück 100 ist an die Geometrie der beiden Verbindungsstücke 41,51 angepasst, hat also vorliegend im Querschnitt das gleiche Profil. Daher kann das Kupplungsstück 100 mit seinen Keilen kämmend in die Zwischenräume eingesetzt werden, die von den miteinander fluchtenden Keilen der Verbindungsstücke 41,51 gebildet werden. Dabei verbinden die Gutseiten der weiteren HTSL-Bänder 160 die Gutseiten der miteinander fluchtenden HTLS Bänder 61,62 der Verbindungsstücke 41,51 jeweils elektrisch leitend miteinander, was in Fig. 8c gezeigt ist.

Das Kupplungsstück 100 kann eingefügt werden durch planparalleles Verschieben aus der in Fig. 8a gezeigten Position. Vorteilhafterweise wird jedoch das in Fig. 8b gezeigte Einschwenken vorgeschlagen: Das Kupplungsstück 100 wird zuerst lediglich verkantet eingesetzt, nämlich an einer seiner Kanten 101. Dabei werden zuerst nur alle Enden der Keile an der Kante 101 des Kupplungsstücks 101 in die Zwischenräume zwischen den Keilen eines der Verbindungsstücke 41 eingesetzt. Dann erfolgt das Einschwenken des Kupplungsstücks 100 um die Kante 101, wobei mit der Drehung anwachsend die Keile von der Kante 101 her immer weiter in die Zwischenräume zwischen den Keilen der beiden Verbindungsstücke 41, 51 eingeschwenkt werden.

## Patentansprüche

1. Stromschiene mit einer Vielzahl von Stromschienensystemelementen, jedes Stromschienensystemelement (1), mit
einem sich entlang des Stromschienensystemelements erstreckenden Gehäuse (3);
einem Supraleiterstrang (2), welcher im Gehäuse (3) entlang des Gehäuses verläuft, wobei der Supraleiterstrang (2) eine Vielzahl nebeneinander verlaufender HTSL-Bänder (61,62) aufweist und jedes HTSL Band eine Gutseite mit einem keramischen Material als HTSL sowie eine der Gutseite abgewandte Rückseite umfasst,
einem Verbindungstück (41) am Ende des Supraleiterstrangs (2) zum elektrischen Verbinden des Supraleiterstrangs mit einem weiteren Supraleiterstrang eines weiteren Stromschienensystemelements mit einem Gegenverbindungsstück (42), wobei
am Verbindungsstück (41) die Rückseiten der Enden der HTSL Bänder befestigt sind, wobei
das Verbindungsstück (41) der Stromschienensystemelemente eine Vielzahl von kammartig in Längsrichtung des Verbindungsstücks verlaufende parallel zueinander angeordnete Keile aufweist, deren geneigte Seitenflächen (44) unter einem Winkel vorzugsweise kleiner als 10° zusammenlaufen, wobei die Rückseiten des Endes der HTSL Bänder auf den Seitenflächen (44) befestigt sind und
das Verbindungsstück (41) der Stromschienensystemelemente derart ausgelegt ist, dass ein Verbinden zweier der Verbindungstücke in einer Richtung senkrecht zur Längsachse des Stromschienensystemelements möglich ist,
wobei die Stromschienensystemelemente (1) an ihren jeweiligen Verbindungsstücken miteinander verbunden sind,
**dadurch gekennzeichnet, dass**
die Gutseiten der HTSL Bänder eine Lotschicht aufweisen, zumindest in einer Kontaktzone (B), in der die Gutseiten zweier in Überlappung gebrachter HTSL Bänder unmittelbar in Kontakt stehen, wobei die Lotschicht zum elektrisch leitenden Verbinden mit HTSL Bändern einer gleichartigen Gegenverbindung vorgesehen ist und vorzugsweise über die gesamte Länge auf der die HTSL Bänder auf den Seitenflächen befestigt sind und
die überlappenden Gutseiten der Enden der HTSL Bänder durch Verlöten der Lötschicht elektrisch leitend miteinander verbunden sind.

2. Stromschiene nach dem vorherigen Anspruch 1, **dadurch gekennzeichnet, dass** die Breite des Keils sich entlang des Verlaufs des Endes der HTSL Bänder (61) erstreckt.

3. Stromschiene nach einem der vorherigen Ansprüche, **dadurch gekennzeichnet, dass** die Abstände der parallel zueinander angeordneten Keile mit den daran befestigten HTSL Bändern am Verbindungsstück (41) derart sind, dass wenn ein gleichartiges mit HTSL Bändern versehenes Gegenverbindungsstück (42) mit dem Verbindungsstück (41) in der Kontaktzone (B) verbunden wird, mindestens ein Gegenkeil des Gegenverbindungsstücks in den Zwischenraum zwischen benachbarten Keilen des Verbindungsstücks passt und dabei in der Kontaktzone die Gutflächen an den Seitenflächen am Gegenkeil gegen die jeweiligen Gutflächen an den Seitenflächen der benachbarten Keile anliegen.

4. Stromschiene nach einem der vorherigen Ansprüche, **dadurch gekennzeichnet, dass** das Verbindungsstück der Stromschienensystemelemente derart ausgelegt ist, dass eine elektrische Verbindung durch eine Bewegung und Andrücken in Keilrichtung relativ zu einem gleichartigen Gegenkontaktstück erfolgen kann;
und/oder
die Spitzen der Keile abgeflacht sind.

5. Stromschiene nach einem der vorherigen Ansprüche, **dadurch gekennzeichnet, dass** das Verbindungsstück der Stromschienensystemelemente ein elektrisch leitfähiges Stromausgleichsstück (51) aufweist, welches die Gutflächen der an den geneigten Seitenflächen der parallel angeordneten Keile befestigten HTSL Bänder elektrisch leitend miteinander verbindet, wobei vorzugsweise
das Stromausgleichsstück (51) Keile aufweist, die zwischen zwei gegenüberstehenden benachbarten Gutflächen an diesen flächig elektrisch leitend anliegen, und
insbesondere vorzugsweise mit diesen verlötet sind, wobei
ferner vorzugsweise die Schmelztemperatur des Lots mindestens um 20 Kelvin oberhalb der Schmelztemperatur der Lotschicht liegt, welche auf der Gutseite der HTSL Bänder in dem Abschnitt, welcher zum elektrisch leitenden Verbinden mit HTSL Bändern einer gleichartigen Gegenverbindung vorgesehen ist.

6. Stromschiene nach dem vorherigen Anspruch 8, **dadurch gekennzeichnet, dass** mehrere nebeneinander verlaufende Supraleiterstränge (2a, 2b) mit jeweils einem Verbindungstück (41a, 41b) am Ende der Supraleiterstränge vorgesehen sind, wobei an jedem Verbindungsstück ein Stromausgleichsstück (51a, 51b) befestigt ist und die Stromausgleichsstücke und/oder Verbindungsstücke (41a,41b) untereinander elektrisch leitend über ein Stromausgleichskontaktstück (5) verbunden sind.

7. Stromschiene nach einem der vorherigen Ansprüche, **dadurch gekennzeichnet, dass** die Rückseite jedes HTSL Bandes ebenfalls als Gutseite ausgebildet ist und insbesondere dazwischen mindestens eine oder zwei Lagen eines Trägers vorgesehen sind und
die Rückseiten der HTSL Bänder mit den Seitenflächen elektrisch leitend verbunden sind, vorzugsweise durch eine Lotschicht verlötet sind;
das Verbindungsstück zumindest im Bereich der Keile elektrisch leitend ist;
und/oder
das mit HTSL Bändern versehene Verbindungsstück derart ist, dass wenn es mit einem gleichartigen mit HTSL Bändern versehenen Gegenverbindungsstück elektrisch leitend in der Kontaktzone verbunden ist, das Verbindungsstück und das Gegenverbindungsstück sich abseits dieser Kontaktzone in Nebenkontaktzonen gegeneinander abstützen und elektrisch leitend miteinander verbunden werden können;
und/oder
die Tiefe des Keils 1 - 5 % größer als die Breite der HTSL Bänder ist und/oder
die Rückseite jedes HTSL Bandes als Träger ausgebildet ist;
und/oder
das mit HTSL Bändern versehene Verbindungsstück derart ist, dass wenn es mit einem gleichartigen mit HTSL Bändern versehenen Gegenverbindungsstück elektrisch leitend in der Kontaktzone verbunden ist, das Verbindungsstück und das Gegenverbindungsstück sich ausschließlich in der Kontaktzone gegeneinander abstützen;
und/oder
die Tiefe des Keils 5 - 25 % größer als die Breite der HTSL Bänder ist.

8. Stromschiene nach einem der vorherigen Ansprüche, **dadurch gekennzeichnet, dass** die elektrischen Kontaktzonen von einer Vielzahl miteinander elektrisch verbundenen flächigen Supraleitern (61,62) an Verbindungsstücken (41, 51) angeordnet sind, wobei die von den flächigen Supraleitern (61,62) gebildeten Kontaktzonen unter einem Winkel kleiner 20°, vorzugsweise 10° und größer als 1° zueinander ausgebildet sind.

9. Stromschiene mit einer Vielzahl von Stromschienensystemelementen, jedes Stromschienensystemelement (1), mit
einem sich entlang des Stromschienensystemelements erstreckenden Gehäuse (3);
einem Supraleiterstrang (2), welcher im Gehäuse (3) entlang des Gehäuses verläuft, wobei der Supraleiterstrang (2) eine Vielzahl nebeneinander verlaufender HTSL-Bänder (61,62) aufweist und jedes HTSL Band eine Gutseite mit einem keramischen Material als HTSL sowie eine der Gutseite abgewandte Rückseite umfasst,
einem Verbindungstück (41) am Ende des Supraleiterstrangs (2) zum elektrischen Verbinden des Supraleiterstrangs mit einem weiteren Supraleiterstrang eines weiteren Stromschienensystemelements mit einem Gegenverbindungsstück (42), wobei
am Verbindungsstück (41) die Rückseiten der Enden der HTSL Bänder befestigt sind,
wobei das Verbindungsstück (41) der Stromschienensystemelemente eine Vielzahl von kammartig in Längsrichtung des Verbindungsstücks verlaufende parallel zueinander angeordnete Keile aufweist, deren geneigte Seitenflächen (44) unter einem Winkel vorzugsweise kleiner als 10° zusammenlaufen, wobei die Rückseiten des Endes der HTSL Bänder auf den Seitenflächen (44) befestigt sind und
das Verbindungsstück (41) der Stromschienensystemelemente derart ausgelegt ist, dass ein Verbinden zweier der Verbindungstücke in einer Richtung senkrecht zur Längsachse des Stromschienensystemelements möglich ist,
**dadurch gekennzeichnet, dass**
die Stromschiene ein Kupplungsstück (100) zum Verbinden von zwei Stromschienensystemelementen (1) umfasst,
das Kupplungsstück (100) eine Vielzahl von kammartig in Längsrichtung des Kupplungsstücks verlaufende parallel zueinander angeordneten Keilen aufweist, deren geneigte Seitenflächen (144) unter einem Winkel vorzugsweise kleiner 10° zusammenlaufen,
wobei das Kupplungsstück (100) auf den Seitenflächen (144) weitere HTSL-Bänder (160) aufweist, welche eine Gutseite mit einem keramischen Material als HTSL sowie eine der Gutseite abgewandte Rückseite umfassen, wobei die Rückseiten der weiteren HTSL Bänder (160) auf den Seitenflächen (144) befestigt sind und sich die weiteren HTSL Bänder (160) entlang der Breite des Keils erstrecken,
das Kupplungsstück (100) an die Geometrie der beiden Verbindungsstücke (41,51) der Stromschienensystemelemente angepasst ist, so dass wenn diese in ihrer Längsachsenrichtung hintereinander angeordnet sind und deren Verbindungsstücke (41,51) sich stirnseitig gegenüberstehen, sowie die kammartig parallel zueinander angeordnete Keile miteinander fluchten, das Kupplungsstück (100) mit seinen Keilen kämmend in die von den miteinander fluchtenden Keile der Verbindungsstücke (41,51) gebildeten Zwischenräume eingesetzt werden kann, wobei die Gutseiten der weiteren HTSL-Bänder (160) die Gutseiten der miteinander fluchtenden HTLS Bänder (61,62) jeweils elektrisch leitend miteinander verbinden,
die Gutseiten der HTSL Bänder eine Lotschicht aufweisen, zumindest in einer Kontaktzone (B), in der die Gutseiten zweier in Überlappung gebrachter HTSL Bänder unmittelbar in Kontakt stehen, wobei die Lotschicht zum elektrisch leitenden Verbinden mit HTSL Bändern einer gleichartigen Gegenverbindung vorgesehen ist und vorzugsweise über die gesamte Länge auf der die HTSL Bänder auf den Seitenflächen befestigt sind, und
wobei die überlappenden Gutseiten der Enden der HTSL Bänder der Verbindungsstücke (41,51) mit den Gutseiten der weiteren HTSL Bänder (160) der des Kupplungsstücks (100) durch Verlöten der Lötschicht elektrisch leitend miteinander verbunden sind.

10. Verfahren zum Verbinden von zwei Stromschienensystemelementen, jedes Stromschienensystemelement (1), mit
einem sich entlang des Stromschienensystemelements erstreckenden Gehäuse (3);
einem Supraleiterstrang (2), welcher im Gehäuse (3) entlang des Gehäuses verläuft, wobei der Supraleiterstrang (2) eine Vielzahl nebeneinander verlaufender HTSL-Bänder (61,62) aufweist und jedes HTSL Band eine Gutseite mit einem keramischen Material als HTSL sowie eine der Gutseite abgewandte Rückseite umfasst,
einem Verbindungstück (41) am Ende des Supraleiterstrangs (2) zum elektrischen Verbinden des Supraleiterstrangs mit einem weiteren Supraleiterstrang eines weiteren Stromschienensystemelements mit einem Gegenverbindungsstück (42), wobei
das Verbindungsstück (41) der Stromschienensystemelemente eine Vielzahl von kammartig in Längsrichtung des Verbindungsstücks verlaufende parallel zueinander angeordnete Keile aufweist, deren geneigte Seitenflächen (44) unter einem Winkel vorzugsweise kleiner als 10° zusammenlaufen, wobei die Rückseiten des Endes der HTSL Bänder auf den Seitenflächen (44) befestigt sind und
das Verbindungsstück (41) der Stromschienensystemelemente derart ausgelegt ist, dass ein Verbinden zweier der Verbindungstücke in einer Richtung senkrecht zur Längsachse des Stromschienensystemelements möglich ist,
die Gutseiten der HTSL Bänder eine Lotschicht aufweisen, zumindest in einer Kontaktzone (B), in der die Gutseiten zweier in Überlappung gebrachter HTSL Bänder unmittelbar in Kontakt stehen, wobei die Lotschicht zum elektrisch leitenden Verbinden mit HTSL Bändern einer gleichartigen Gegenverbindung vorgesehen ist und vorzugsweise über die gesamte Länge auf der die HTSL Bänder auf den Seitenflächen befestigt sind, und
wobei
am Verbindungsstück (41) die Rückseiten der Enden der HTSL Bänder befestigt sind, mit folgenden Schritten:
Anordnen von zwei Stromschienensystemelementen in ihrer Längsachsenrichtung hintereinander;
Ausrichten mindestens eines Stromschienensystemelements so, dass die Verbindungsstücke (41,51) sich stirnseitig gegenüberstehen;
Ausrichten mindestens eines Stromschienensystemelements derart, dass die kammartig parallel zueinander angeordnete Keile der beiden Verbindungsstücke (41,51) miteinander fluchten;
Bereitstellen eines Kupplungsstücks (100) mit einer Vielzahl von kammartig in Längsrichtung des Kupplungsstücks verlaufenden parallel zueinander angeordneten Keilen, deren geneigte Seitenflächen (144) unter einem Winkel kleiner als 20°,
vorzugsweise 10° zusammenlaufen, wobei das Kupplungsstück (100) auf den Seitenflächen (144) weitere HTSL-Bänder (160) aufweist, welche eine Gutseite mit einem keramischen Material als HTSL sowie eine der Gutseite abgewandte Rückseite umfassten, wobei die Rückseiten der weiteren HTSL Bänder (160) auf den Seitenflächen (144) befestigt sind und sich die weiteren HTSL Bänder (160) entlang der Breite des Keils erstrecken, wobei das Kupplungsstück an die Geometrie der beiden Verbindungsstücke (41,51) angepasst ist, sodass das Kupplungsstück (100) mit seinen Keilen kämmend in die von den miteinander fluchtenden Keile der Verbindungsstücke (41,51) gebildeten Zwischenräume eingesetzt werden kann, wobei die Gutseiten der weiteren HTSL-Bänder (160) die Gutseiten der miteinander fluchtenden HTLS Bänder (61,62) jeweils elektrisch leitend miteinander verbinden;
Einsetzen des Kupplungsstücks (100) zuerst lediglich an einer seiner Kanten, wobei nur alle Enden der Keile an der Kante des Kupplungsstücks in die Zwischenräume zwischen den Keilen eines der Verbindungsstücke (41) eingesetzt werden;
anschließendes Einschwenken des Kupplungsstücks (100), wobei mit der Drehung anwachsend die Keile von der Kante her immer weiter in die Zwischenräume zwischen den Keilen der beiden Verbindungsstücke (41, 51) eingeschwenkt werden; und
elektrisch leitendendes miteinander Verbinden der überlappenden Gutseiten der Enden der HTSL Bänder der Verbindungsstücke (41,51) mit den Gutseiten der weiteren HTSL Bänder (160) des Kupplungsstücks (100) durch Verlöten der Lötschicht.

## Claims

1. Busbar comprising a plurality of busbar system elements, each busbar system element (1) comprising
a housing (3) extending along the busbar system element;
a superconductor strand (2) which runs in the housing (3) along the housing, wherein the superconductor strand (2) has a plurality of HTS strips (61, 62) running side by side, and each HTS strip comprises a good side with a ceramic material as HTS and a rear side facing away from the good side,
a connector (41) at the end of the superconductor strand (2) for electrically connecting the superconductor strand to another superconductor strand of another busbar system element with a counter connector (42), wherein
the rear sides of the ends of the HTS strips are attached to the connector (41), wherein
the connector (41) of the busbar system elements has a plurality of wedges arranged parallel to each other in a comb-like manner in the longitudinal direction of the connector, the inclined side surfaces (44) of which converge at an angle preferably less than 10°, the rear sides of the end of the HTS strips being attached to the side surfaces (44), and
the connector (41) of the busbar system elements is designed in such a way that two of the connectors can be connected in a direction perpendicular to the longitudinal axis of the busbar system element,
wherein the busbar system elements (1) are connected to each other at their respective connectors,
**characterized in that**
the good sides of the HTS strips have a solder layer, at least in a contact zone (B) in which the good sides of two overlapping HTS strips are in direct contact, wherein the solder layer is provided for electrically conductive connection to HTS strips of a similar counter-connection and is preferably located over the entire length on which the HTS strips are attached to the side surfaces, and
the overlapping good sides of the ends of the HTS strips are electrically conductively connected to each other by soldering the solder layer.

2. Busbar according to the preceding claim 1, **characterized in that** the width of the wedge extends along the course of the end of the HTS strips (61).

3. Busbar according to one of the preceding claims, **characterized in that** the distances between the wedges arranged parallel to each other with the HTS strips attached thereto on the connector (41) are such that
when a similar counter connector (42) provided with HTS strips is connected to the connector (41) in the contact zone (B),
at least one counter wedge of the counter connector fits into the space between adjacent wedges of the connector, with the good surfaces on the side surfaces of the counter wedge resting against the respective good surfaces on the side surfaces of the adjacent wedges in the contact zone.

4. Busbar according to one of the preceding claims, **characterized in that** the connector of the busbar system elements is designed in such a way that an electrical connection can be made by movement and pressing in the wedge direction relative to a similar counter contact piece;
and/or
the tips of the wedges are flattened.

5. Busbar according to one of the preceding claims, **characterized in that** the connector of the busbar system elements comprises an electrically conductive current equalizing piece (51) which electrically connects the good surfaces of the HTS strips attached to the inclined side surfaces of the parallel wedges, wherein preferably
the current equalizing piece (51) has wedges which are in flat, electrically conductive contact on and between two opposite adjacent good surfaces, and
in particular are preferably soldered to these, wherein
furthermore, preferably the melting temperature of the solder is at least 20 Kelvin above the melting temperature of the solder layer which is provided on the good side of the HTS strips in the section which is provided for electrically conductive connection to HTS strips of a similar counter-connection.

6. Busbar according to the preceding claim 8, **characterized in that** a plurality of superconducting strands (2a, 2b) running side by side, each having a connector (41a, 41b), are provided at the end of the superconducting strands, wherein a current equalizing piece (51a, 51b) is attached to each connector, and the current equalization pieces and/or connectors (41a, 41b) are electrically conductively connected to each other via a current equalization contact piece (5).

7. Busbar according to one of the preceding claims, **characterized in that** the rear side of each HTS strip is also designed as a good side and, in particular, at least one or two layers of a carrier are provided in between, and
the rear sides of the HTS strips are electrically conductively connected to the side surfaces, preferably soldered by a solder layer;
the connector is electrically conductive at least in the area of the wedges;
and/or
the connector provided with HTS strips is such that when it is electrically conductively connected in the contact zone to a similar counter connector provided with HTS strips, the connector and the counter connector can support each other away from this contact zone in secondary contact zones and can be electrically conductively connected to each other;
and/or
the depth of the wedge is 1-5% greater than the width of the HTS strips;
and/or
the rear side of each HTS strip is designed as a carrier;
and/or
the connector provided with HTS strips is such that, when it is electrically conductively connected in the contact zone to a similar counter connector provided with HTS strips, the connector and the counter connector support each other exclusively in the contact zone;
and/or
the depth of the wedge is 5-25% greater than the width of the HTS strips.

8. Busbar according to one of the preceding claims, **characterized in that** the electrical contact zones of a plurality of flat superconductors (61, 62) electrically connected to each other are arranged on connectors (41, 51), wherein the contact zones formed by the flat superconductors (61, 62) are formed at an angle of less than 20°, preferably 10° and greater than 1° to each other.

9. Busbar comprising a plurality of busbar system elements, each busbar system element (1) comprising
a housing (3) extending along the busbar system element;
a superconductor strand (2) which runs in the housing (3) along the housing, wherein the superconductor strand (2) has a plurality of HTS strips (61, 62) running side by side, and each HTS strip comprises a good side with a ceramic material as HTS and a rear side facing away from the good side,
a connector (41) at the end of the superconductor strand (2) for electrically connecting the superconductor strand to another superconductor strand of another busbar system element with a counter connector (42), wherein
the rear sides of the ends of the HTS strips are attached to the connector (41),
wherein
the connector (41) of the busbar system elements has a plurality of wedges arranged parallel to each other in a comb-like manner in the longitudinal direction of the connector, the inclined side surfaces (44) of which converge at an angle preferably less than 10°, the rear sides of the end of the HTS strips being attached to the side surfaces (44), and
the connector (41) of the busbar system elements is designed in such a way that two of the connectors can be connected in a direction perpendicular to the longitudinal axis of the busbar system element,
**characterized in that**
the busbar comprises a coupling piece (100) for connecting two busbar system elements (1), the coupling piece (100) having a plurality of wedges arranged parallel to each other and extending in a comb-like manner in the longitudinal direction of the coupling piece, the inclined side surfaces (144) of the wedges converging at an angle preferably less than 10°,
wherein the coupling piece (100) comprises further HTS strips (160) on the side surfaces (144), which comprise a good side with a ceramic material as HTS and a rear side facing away from the good side, wherein the rear sides of the further HTS strips (160) are fastened to the side surfaces (144) and the further HTS strips (160) extend along the width of the wedge,
the coupling piece (100) is adapted to the geometry of the two connectors (41, 51) of the busbar system elements so that when these are arranged one behind the other in their longitudinal axis direction and their connectors (41, 51) face each other at the front ends and the wedges arranged parallel to each other in a comb-like manner are aligned with each other, the coupling piece (100) can be inserted with its wedges combing into the spaces formed by the aligned wedges of the connectors (41, 51), whereby the good sides of the further HTS strips (160) electrically conductively connect the good sides of the HTS strips (61, 62) that are aligned with each other,
the good sides of the HTS strips have a solder layer, at least in a contact zone (B) in which the good sides of two overlapping HTS strips are in direct contact, wherein the solder layer is provided for electrically conductive connection to HTS strips of a similar counter-connection and is preferably located over the entire length on which the HTS strips are attached to the side surfaces, and
wherein the overlapping good sides of the ends of the HTS strips of the connectors (41, 51) are electrically conductively connected to the good sides of the further HTS strips (160) of the coupling piece (100) by soldering the solder layer.

10. Method for connecting two busbar system elements, each busbar system element (1) comprising
a housing (3) extending along the busbar system element;
a superconductor strand (2) which runs in the housing (3) along the housing, wherein the superconductor strand (2) has a plurality of HTS strips (61, 62) running side by side, and each HTS strip comprises a good side with a ceramic material as HTS and a rear side facing away from the good side,
a connector (41) at the end of the superconductor strand (2) for electrically connecting the superconductor strand to another superconductor strand of another busbar system element with a counter connector (42), wherein
the connector (41) of the busbar system elements has a plurality of wedges arranged parallel to each other in a comb-like manner in the longitudinal direction of the connector, the inclined side surfaces (44) of which converge at an angle preferably less than 10°, the rear sides of the end of the HTS strips being attached to the side surfaces (44), and
the connector (41) of the busbar system elements is designed in such a way that two of the connectors can be connected in a direction perpendicular to the longitudinal axis of the busbar system element, wherein
the good sides of the HTS strips have a solder layer, at least in a contact zone (B) in which the good sides of two overlapping HTS strips are in direct contact, wherein the solder layer is provided for electrically conductive connection to HTS strips of a similar counter-connection and is preferably located over the entire length on which the HTS strips are attached to the side surfaces, and
the rear sides of the ends of the HTS strips are attached to the connector (41), comprising the following steps:
arranging two busbar system elements one behind the other in their longitudinal axis direction;
aligning at least one busbar system element so that the connectors (41, 51) face each other at the front side;
aligning at least one busbar system element so that the wedges of the two connectors (41, 51), which are arranged parallel to each other in a comb-like manner, are aligned with each other;
providing a coupling piece (100) with a plurality of wedges arranged parallel to each other in a comb-like manner in the longitudinal direction of the coupling piece, whose inclined side surfaces (144) converge at an angle of less than 20°, preferably 10°, the coupling piece (100) having further HTS strips (160) on the side surfaces (144), which comprise a good side with a ceramic material as HTS and a rear side facing away from the good side, the rear sides of the further HTS strips (160) being fastened to the side surfaces (144) and the further HTS strips (160) extending along the width of the wedge, wherein the coupling piece is adapted to the geometry of the two connectors (41, 51) so that the coupling piece (100) can be inserted with its wedges combing into the spaces formed by the aligned wedges of the connectors (41, 51), wherein the good sides of the further HTS strips (160) electrically conductively connect the good sides of the aligned HTLS strips (61, 62) to each other;
Inserting the coupling piece (100) initially only at one of its edges, whereby only all ends of the wedges at the edge of the coupling piece are inserted into the spaces between the wedges of one of the connectors (41);
Subsequently pivoting in the coupling piece (100) into place, whereby, as the rotation increases, the wedges are pivoted in further and further from the edge into the spaces between the wedges of the two connectors (41, 51); and
electrically conductively connecting the overlapping good sides of the ends of the HTS strips of the connectors (41, 51) to the good sides of the further HTS strips (160) of the coupling piece (100) by soldering the solder layer.

## Revendications

1. Rail conducteur avec une pluralité d'éléments de système de rail conducteur, chaque élément de système de rail conducteur (1) avec
un boîtier (3) s'étendant le long de l'élément de système de rail conducteur ;
un brin supraconducteur (2) qui s'étend dans le boîtier (3) le long du boîtier, dans lequel le brin supraconducteur (2) présente une pluralité de bandes HTSL (61, 62) s'étendant les unes à côté des autres et chaque bande HTSL comprend une face utile avec un matériau céramique comme HTSL et une face arrière détournée de la face utile,
une pièce de raccordement (41) à l'extrémité du brin supraconducteur (2) pour raccorder électriquement le brin supraconducteur à un autre brin supraconducteur d'un autre élément de système de rail conducteur avec une contre-pièce de raccordement (42), dans lequel
les faces arrière des extrémités des bandes HTSL sont fixées à la pièce de raccordement (41),
la pièce de raccordement (41) des éléments de système de rail conducteur présente une pluralité de cales disposées parallèlement les unes aux autres, s'étendant en forme de peigne dans le sens longitudinal de la pièce de raccordement, dont les surfaces latérales inclinées (44) convergent sous un angle de préférence inférieur à 10°, les faces arrière de l'extrémité des bandes HTSL étant fixées sur les surfaces latérales (44) et
la pièce de raccordement (41) des éléments de système de rail conducteur est conçue de telle sorte qu'il est possible de raccorder deux des pièces de raccordement dans un sens perpendiculaire à l'axe longitudinal de l'élément de système de rail conducteur,
dans lequel les éléments de système de rail conducteur (1) sont raccordés entre eux au niveau de leurs pièces de raccordement respectives,
**caractérisé en ce que**
les faces utiles des bandes HTSL présentent une couche de brasure, au moins dans une zone de contact (B), dans laquelle les faces utiles de deux bandes HTSL mises en chevauchement sont en contact direct, la couche de brasure étant prévue pour le raccordement électriquement conducteur avec des bandes HTSL d'un contre-raccordement de même nature et de préférence sur toute la longueur sur laquelle les bandes HTSL sont fixées sur les surfaces latérales, et
les faces utiles chevauchantes des extrémités des bandes HTSL sont raccordées entre elles de manière électriquement conductrice par brasage de la couche de brasure.

2. Rail conducteur selon la revendication 1 précédente, **caractérisé en ce que** la largeur de la cale s'étend le long de la trajectoire de l'extrémité des bandes HTSL (61).

3. Rail conducteur selon l'une des revendications précédentes, **caractérisé en ce que** les distances entre les cales disposées parallèlement les unes aux autres avec les bandes HTSL y fixées à la pièce de raccordement (41) sont telles que lorsqu'une contre-pièce de raccordement de même nature (42) munie de bandes HTSL est raccordée à la pièce de raccordement (41) dans la zone de contact (B), au moins une contre-cale de la contre-pièce de raccordement s'adapte dans l'espace intermédiaire entre des cales adjacentes de la pièce de raccordement et, ce faisant, les surfaces utiles aux surfaces latérales à la contre-cale s'appuient contre les surfaces utiles respectives aux surfaces latérales des cales adjacentes dans la zone de contact.

4. Rail conducteur selon l'une des revendications précédentes, **caractérisé en ce que** la pièce de raccordement des éléments de système de rail conducteur est conçue de telle sorte qu'un raccordement électrique peut être établi par un mouvement et une pression dans le sens de la cale par rapport à une contre-pièce de raccordement de même nature ;
et/ou
les pointes des cales sont aplaties.

5. Rail conducteur selon l'une des revendications précédentes, **caractérisé en ce que** la pièce de raccordement des éléments de système de rail conducteur comporte une pièce de compensation de courant électriquement conductrice (51) qui raccorde entre elles de manière électriquement conductrice les surfaces utiles des bandes HTSL fixées aux surfaces latérales inclinées des cales disposées parallèlement, dans lequel de préférence
la pièce de compensation de courant (51) comporte des cales qui entre deux surfaces utiles adjacentes opposées sont en appui platement électriquement conducteur à celles-ci, et
en particulier sont de préférence brasées à celles-ci, dans lequel
de plus, de préférence, la température de fusion de la brasure est supérieure d'au moins 20 Kelvin à la température de fusion de la couche de brasure qui est prévue sur la surface utile des bandes HTSL dans la section qui est prévue pour le raccordement électriquement conducteur avec des bandes HTSL d'un contre-raccordement de même nature.

6. Rail conducteur selon la revendication 8 précédente, **caractérisé en ce que** plusieurs brins supraconducteurs (2a, 2b) s'étendant les uns à côté des autres, avec chacun une pièce de raccordement (41a, 41b) à l'extrémité des brins supraconducteurs, sont prévus, dans lequel une pièce de compensation de courant (51a, 51b) est fixée à chaque pièce de raccordement et les pièces de compensation de courant et/ou les pièces de raccordement (41a, 41b) sont raccordées entre elles de manière électriquement conductrice par l'intermédiaire d'une pièce de contact de compensation de courant (5).

7. Rail conducteur selon l'une des revendications précédentes, **caractérisé en ce que** la face arrière de chaque bande HTSL est également conçue comme face utile et, en particulier, au moins une ou deux couches d'un support sont prévues entre celles-ci et
les faces arrière des bandes HTSL sont raccordées de manière électriquement conductrice aux surfaces latérales, de préférence brasées par une couche de brasure ;
la pièce de raccordement est électriquement conductrice au moins dans la zone de cales ;
et/ou
la pièce de raccordement munie de bandes HTSL est telle que lorsqu'elle est raccordée de manière électriquement conductrice dans la zone de contact à une contre-pièce de raccordement de même nature munie de bandes HTSL, la pièce de raccordement et la contre-pièce de raccordement s'appuient mutuellement l'une contre l'autre en dehors de cette zone de contact dans des zones de contact secondaires et peuvent être raccordées entre elles de manière électriquement conductrice ;
et/ou
la profondeur de la cale est de 1 à 5 % supérieure à la largeur des bandes HTSL et/ou
la face arrière de chaque bande HTSL est conçue comme support ;
et/ou
la pièce de raccordement munie de bandes HTSL est telle que lorsqu'elle est raccordée de manière électriquement conductrice dans la zone de contact à une contre-pièce de raccordement de même nature munie de bandes HTSL, la pièce de raccordement et la contre-pièce de raccordement de même nature s'appuient mutuellement l'une contre l'autre exclusivement dans la zone de contact ;
et/ou
la profondeur de la cale est de 5 à 25 % supérieure à la largeur des bandes HTSL.

8. Rail conducteur selon l'une des revendications précédentes, **caractérisé en ce que** les zones de contact électriques d'une pluralité de supraconducteurs plats (61, 62) raccordés électriquement entre eux (41, 51) sont disposées à des pièces de raccordement (41, 51), dans lequel
les zones de contact formées par les supraconducteurs plats (61, 62) sont conçues entre elles selon un angle inférieur à 20°, de préférence 10° et supérieur à 1°.

9. Rail conducteur avec une pluralité d'éléments de système de rail conducteur, chaque élément de système de rail conducteur (1) avec
un boîtier (3) s'étendant le long de l'élément de système de rail conducteur
un brin supraconducteur (2) qui s'étend dans le boîtier (3) le long du boîtier, dans lequel le brin supraconducteur (2) présente une pluralité de bandes HTSL (61, 62) s'étendant les unes à côté des autres et chaque bande HTSL comprend une face utile avec un matériau céramique comme HTSL et une face arrière détournée de la face utile,
une pièce de raccordement (41) à l'extrémité du brin supraconducteur (2) pour le raccordement électrique du brin supraconducteur avec un autre brin supraconducteur d'un autre élément de système de rail conducteur avec une contre-pièce de raccordement (42), dans lequel
les faces arrière des extrémités des bandes HTSL sont fixées à la pièce de raccordement (41),
dans lequel
la pièce de raccordement (41) des éléments de système de rail conducteur présente une pluralité de cales disposées parallèlement les unes aux autres, s'étendant en forme de peigne dans le sens longitudinal de la pièce de raccordement, dont les surfaces latérales inclinées (44) convergent sous un angle de préférence inférieur à 10°, les faces arrière de l'extrémité des bandes HTSL étant fixées sur les surfaces latérales (44) et
la pièce de raccordement (41) des éléments de système de rail conducteur est conçue de telle sorte que deux des pièces de raccordement peuvent être raccordées dans un sens perpendiculaire à l'axe longitudinal de l'élément de système de rail conducteur,
**caractérisé en ce que**
le rail conducteur comprend une pièce d'accouplement (100) pour raccorder deux éléments (1) de système de rail conducteur,
la pièce d'accouplement (100) présente une pluralité de cales disposées parallèlement les unes aux autres, s'étendant en forme de peigne dans le sens longitudinal de la pièce d'accouplement, dont les surfaces latérales inclinées (44) convergent sous un angle de préférence inférieur à 10°,
dans lequel la pièce d'accouplement (100) présente sur les surfaces latérales (144) d'autres bandes HTSL (160) qui comprennent une face utile avec un matériau céramique comme HTSL et une face arrière détournée de la face utile, les faces arrière des autres bandes HTSL (160) étant fixées sur les surfaces latérales (144) et les autres bandes HTSL (160) s'étendant le long de la largeur de la cale,
la pièce d'accouplement (100) est adaptée à la géométrie des deux pièces de raccordement (41, 51) des éléments de système de rail conducteur, de sorte que lorsque celles-ci sont disposées les unes derrière les autres dans le sens de leur axe longitudinal et que leurs pièces de raccordement (41, 51) se font face frontalement ainsi que les cales disposées en forme de peigne parallèlement les unes aux autres alignent les unes avec les autres, la pièce d'accouplement (100) avec ses cales peut être insérée en peignant dans les espaces intermédiaires formés par les cales alignées les unes avec les autres des pièces de raccordement (41, 51), les faces utiles des autres bandes HTSL (160) respectivement raccordant entre elles de manière électriquement conductrice les faces utiles des bandes HTLS (61, 62) alignées les unes avec les autres,
les faces utiles des bandes HTSL présentent une couche de brasure, au moins dans une zone de contact (B), dans laquelle les faces utiles de deux bandes HTSL mises en chevauchement sont en contact direct, la couche de brasure étant prévue pour le raccordement électriquement conducteur avec des bandes HTSL d'un contre-raccordement de même nature et de préférence sur toute la longueur sur laquelle les bandes HTSL sont fixées sur les surfaces latérales, et
dans lequel les faces utiles chevauchantes des extrémités des bandes HTSL des pièces de raccordement (41, 51) sont raccordées de manière électriquement conductrice avec les faces utiles des autres bandes HTSL (160) de la pièce d'accouplement (100) par brasage de la couche de brasure.

10. Procédé pour raccorder deux éléments de système de rail conducteur, chaque élément de système de rail conducteur (1) avec
un boîtier (3) s'étendant le long de l'élément de système de rail conducteur ;
un brin supraconducteur (2) qui s'étend dans le boîtier (3) le long du boîtier, dans lequel le brin supraconducteur (2) présente une pluralité de bandes HTSL (61, 62) s'étendant les unes à côté des autres et chaque bande HTSL comprend une face utile avec un matériau céramique comme HTSL et une face arrière détournée de la face utile,
une pièce de raccordement (41) à l'extrémité du brin supraconducteur (2) pour raccorder électriquement le brin supraconducteur à un autre brin supraconducteur d'un autre élément de système de rail conducteur avec une contre-pièce de raccordement (42), dans lequel
la pièce de raccordement (41) des éléments de système de rail conducteur présente une pluralité de cales disposées parallèlement les unes aux autres, en forme de peigne, dans le sens longitudinal de la pièce de raccordement, dont les surfaces latérales inclinées (44) convergent sous un angle de préférence inférieur à 10°, les faces arrière de l'extrémité des bandes HTSL étant fixées sur les surfaces latérales (44) et
la pièce de raccordement (41) des éléments de système de rail conducteur étant conçue de telle sorte que deux des pièces de raccordement peuvent être raccordées dans un sens perpendiculaire à l'axe longitudinal de l'élément de système de rail conducteur,
les faces utiles des bandes HTSL présentent une couche de brasure, au moins dans une zone de contact (B), dans laquelle les faces utiles de deux bandes HTSL mises en chevauchement sont en contact direct, la couche de brasure étant prévue pour le raccordement électriquement conducteur avec des bandes HTSL d'une contre-pièce de raccordement de même nature et de préférence sur toute la longueur sur laquelle les bandes HTSL sont fixées sur les surfaces latérales, et
dans lequel
les faces arrière des extrémités des bandes HTSL sont fixées à la pièce de raccordement (41), avec les étapes suivantes :
disposition de deux éléments de système de rail conducteur l'un derrière l'autre dans le sens de leur axe longitudinal ;
alignement d'au moins un élément de système de rail conducteur de telle sorte que les pièces de raccordement (41, 51) se font face frontalement ;
alignement d'au moins un élément de système de rail conducteur de telle sorte que les cales disposées en forme de peigne parallèlement les unes aux autres des deux pièces de raccordement (41, 51) alignent les unes avec les autres ;
fourniture d'un élément d'accouplement (100) avec une pluralité de cales disposées parallèlement les unes aux autres, s'étendant en forme de peigne dans le sens longitudinal de l'élément d'accouplement, dont les surfaces latérales inclinées (144) convergent selon un angle inférieur à 20°, de préférence 10°, l'élément d'accouplement (100) présentant sur les surfaces latérales (144) d'autres bandes HTSL (160) qui comprennent une face utile avec un matériau céramique comme HTSL ainsi qu'une face arrière détournée de la face utile, les faces arrière des autres bandes HTSL (160) étant fixées sur les surfaces latérales (144) et les autres bandes HTSL (160) s'étendant sur la largeur de la cale, la pièce d'accouplement étant adaptée à la géométrie des deux pièces de raccordement (41, 51) de telle sorte que la pièce d'accouplement (100) avec ses cales peut être insérée en peignant dans les espaces formés par les cales mutuellement alignées les unes avec les autres des pièces de raccordement (41, 51), les faces utiles des autres bandes HTSL (160) respectivement raccordant entre elles de manière électriquement conductrice les faces utiles des bandes HTLS (61, 62) alignées les unes avec les autres,
insertion de la pièce d'accouplement (100) d'abord uniquement sur l'un de ses bords, dans lequel uniquement toutes les extrémités des cales sur le bord de la pièce d'accouplement sont insérées dans les espaces intermédiaires entre les cales de l'une des pièces de raccordement (41) ;
puis faire pivoter la pièce d'accouplement (100), dans lequel, à mesure que la rotation s'accentue, les cales sont pivotées de plus en plus dans les espaces intermédiaires entre les cales des deux pièces de raccordement (41, 51) ; et
raccordement mutuel électriquement conducteur des faces utiles chevauchantes des extrémités des bandes HTSL des pièces de raccordement (41, 51) avec les faces utiles des autres bandes HTSL (160) de la pièce d'accouplement (100) par brasage de la couche de brasure.
